# EUROPEAN PATENT APPLICATION

(11) **EP 2 605 460 A1**
(43) Date of publication of application: **19.06.2013**
(21) Application number: 12191434.5
(22) Date of filing: 06.11.2012
(51) Int. Cl.: H04L 12/58

(54) **Method, apparatus, and system for transferring file to user of instant message system**

(30) Priority: 13.12.2011 CN 201110415219
(71) Applicant: Huawei Technologies Co., Ltd., Longgang District, Shenzhen Guangdong 518129 (CN)
(72) Inventor: Chen, Xiangrong, 518129 Shenzhen (CN)
(74) Representative: Isarpatent

(57) **Abstract**

Embodiments of the present invention disclose a method, an apparatus, and a system for transferring a file to a user of an instant message system, where the method includes: receiving a file sent by a user of a first instant message system to a user of a second instant message system; sending a file transfer notification message to the user of the second instant message system by using an instant message agent server; and sending the file to the user of the second instant message system according to a response of the user of the second instant message system based on the file transfer notification message. In the method, an ND is set at an instant message agent server side, the ND temporarily stores a file sent by a sender to a receiver, and then the instant message agent server sends a URL of the file to the client of the receiver. In this manner, a user of a different IM system acquires the file by using the URL of the file, thereby achieving the objective of transferring the file to a user of a different IM system.

## Description

### FIELD OF THE INVENTION

The present invention relates to the field of instant communications, and in particular, to a method, an apparatus, and a system for transferring a file to a user of an instant message system.

### BACKGROUND OF THE INVENTION

At present, many instant message (Instant Message, IM) systems exist on the Internet, for example, MSN, ICQ, Yahoo!, and QQ. These IM systems are independent and closed system. To contact with users in different IM systems, a user needs to register an account with each of these systems. In this case, the user needs to start clients for different IM systems when contacting users in different IM systems, which causes a lot of trouble in operation.

In view of the preceding situation, an instant message agent (IM Agent) product appears in the market. The product provides a client capable of accessing multiple IM systems at the same time, and the client may be based on a personal computer (PC, Personal Computer), a web (WEB), and a mobile phone (Mobile). The user is capable of logging in to multiple different IM systems at the same time by using the client, which avoids the problem that the user needs to start clients of multiple IM systems when needing to use services of the multiple IM systems. However, at present, the instant message agent product cannot support the function of transferring a file from a user of an instant message system to a user of another instant message system, resulting in poor user experience.

### SUMMARY OF THE INVENTION

In view of this, provide a method for transferring a file to a user of a different instant message system.

At the same time, provide a file transfer apparatus.

At the same time, provide an instant message agent system.

An embodiment of the present invention provides a method for to transferring a file to a user of an instant message system, including: receiving a file sent by a user of a first instant message system to a user of a second instant message system; sending a file transfer notification message to the user of the second instant message system by an instant message agent server; and sending the file to the user of the second instant message system according to a response of the user of the second instant message system based on the file transfer notification message.

Another embodiment of the present invention provides a file transfer apparatus, including: a receiving unit, configured to receive a file sent by a user of a first instant message system to a user of a second instant message system; a notification message sending unit, configured to send a file transfer notification message to the user of the second instant message system by using an instant message agent server after the receiving unit starts to receive the file; and a file transfer unit, configured to send the file received by the receiving unit to the user of the second instant message system according to a response of the user of the second instant message system based on the file transfer notification message.

Still another embodiment of the present invention provides an instant message agent system, including: a client apparatus, configured to send a file sent by a user of a first instant message system to a user of a second instant message system; a file transfer apparatus, configured to receive the file, send a file transfer notification message to an instant message agent apparatus, and send the file to the user of the second instant message system according to a response of the user of the second instant message system based on the file transfer notification message; and the instant message agent apparatus, configured to forward the file transfer notification message to the user of the second instant message system.

In the method for transferring a file to a user of an instant message system according to the embodiment of the present invention, an ND is set at an instant message agent server side, the ND temporarily stores a file sent by a sender to a receiver, and then the instant message agent server sends a link of the file to the client of the receiver. In this manner, a user of a different IM system acquires the file by using the URL of the file, thereby achieving the objective of transferring the file to a user of a different IM system.

### BRIEF DESCRIPTION OF THE DRAWINGS

FIG. 1 is a flow chart of transferring a file to a user of an instant message system according to an embodiment of the present invention;
FIG. 2 is a flow chart of receiving a file sent by a user of a first instant message system in FIG. 1;
FIG. 3 is a schematic diagram of an application scenario of transferring a file to a user of an instant message system according to an embodiment of the present invention;
FIG. 4 is a schematic diagram of another application scenario of transferring a file to a user of an instant message system according to an embodiment of the present invention;
FIG. 5 is a schematic diagram of still another application scenario of transferring a file to a user of an instant message system according to an embodiment of the present invention;
FIG. 6 is a schematic structural diagram of a file transfer apparatus according to an embodiment of the present invention; and
FIG. 7 is a schematic structural diagram of an instant message agent system according to an embodiment of the present invention.

### DETAILED DESCRIPTION OF THE EMBODIMENTS

The technical solutions in the embodiments of the present invention are clearly and fully described in the following with reference to the accompanying drawings in the embodiments of the present invention. Apparently, the embodiments to be described are only a part rather than all of the embodiments of the present invention. Based on the embodiments of the present invention, all other embodiments obtained by persons of ordinary skill in the art without creative effects shall fall within the protection scope of the present invention.

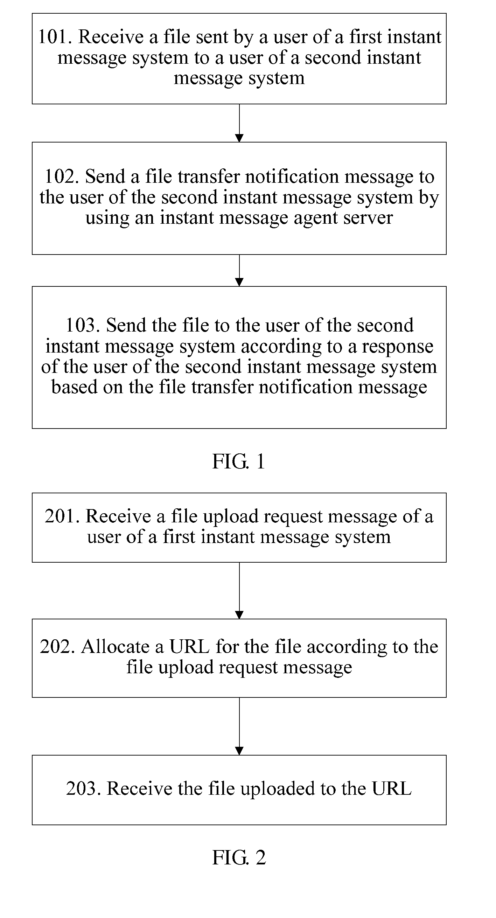

FIG. 1 is a flow chart of transferring a file to a user of an instant message system according to an embodiment of the present invention.

101. Receive a file sent by a user of a first instant message system to a user of a second instant message system.

Specifically, in this embodiment of the present invention, a network storage (Net Disk, ND) apparatus is added at an instant message agent (IM Agent) system side. The ND may be a part of an instant message system and may also be an independent network element as long as it is capable of interacting with the instant message system. It should be understood that the ND may also be a third-party network element, that is, be independent of the instant message agent system. In this embodiment, the user of the first instant message system may be a user using the instant message agent system. The user of the second instant message system is a user of another instant message system (for example, QQ or Yahoo! Message), different from the user of the first instant message system. When logging in to a client provided by the instant message agent system, the user of the first instant message system is capable of performing a text chat with the user of the second instant message system. When the user of the first instant message system needs to send a file to the user of the second instant message system, a file that needs to be sent may be selected.

The process of receiving, by the ND, the file sent by the user of the first instant message system, as shown in FIG. 2, includes the following steps:

201. The user of the first instant message system sends a file upload request message to the ND by using the client of the instant message agent system, where specifically, the request message may include a user identifier of a sender (that is, an identifier of the user of the first instant message system), a name of the file, a type of the file, a user identifier of a receiver (that is, an identifier of the user of the second instant message system), and the like.

202. After receiving the request message, the ND authenticates the user of the first instant message system, and allocates a uniform resource locator (URL) for the file after the authentication is passed. Specifically, the ND further returns the URL to the user of the first instant message system by a response message.

203. Receive the file that is from the client of the instant message agent system and uploaded to the URL.

Specifically, after receiving the response message of the ND, the client of the instant message agent system sends the file to the URL according to the URL carried in the response message.

Alternatively, after receiving the file upload request message sent by the user of the first instant message system, the ND authenticates the user of the first instant message system, and returns a response message to the user of the first instant message system after the authentication is passed. After receiving the response message, the user of the first instant message system sends the file to the ND. After receiving the file, the ND allocates a URL for the file for the receiver (the user of the second instant message system) to subsequently download the file by using the URL.

102. Send a file transfer notification message to the user of the second instant message system by using an instant message agent server.

Specifically, after receiving the file sent by the user of the first instant message system to the user of the second instant message system, the ND sends a file transfer notification message to the user of the second instant message system by using the instant message agent server. The instant message agent server sends the notification message to the user of the second instant message system through an open message interface provided by the second instant message system. The notification message adopts an IM text message format, and the content may include a user identifier of the sender, a name of the file, and a URL of the file. The user identifier of the sender may be a user code, for example, a User ID, a user nickname, or a user remark name. The notification message may be "User XXX transfers the file <file name> to you, <http URL, for example, http://192.168.1.1/rcs/usera>, please determine whether to receive or reject."

Alternatively, the ND may immediately send the file transfer notification message to the receiver when being receiving the file, and may send, according to a file extract request of the receiver, the file to the user of the second instant message system while receiving the file.

103. Send the file to the user of the second instant message system according to a response of the user of the second instant message system based on the file transfer notification message.

Specifically, after receiving the file transfer notification message, the user of the second instant message system acquires the file from the ND by clicking the URL of the file, for example, http://192.168.1.1/rcs/usera.

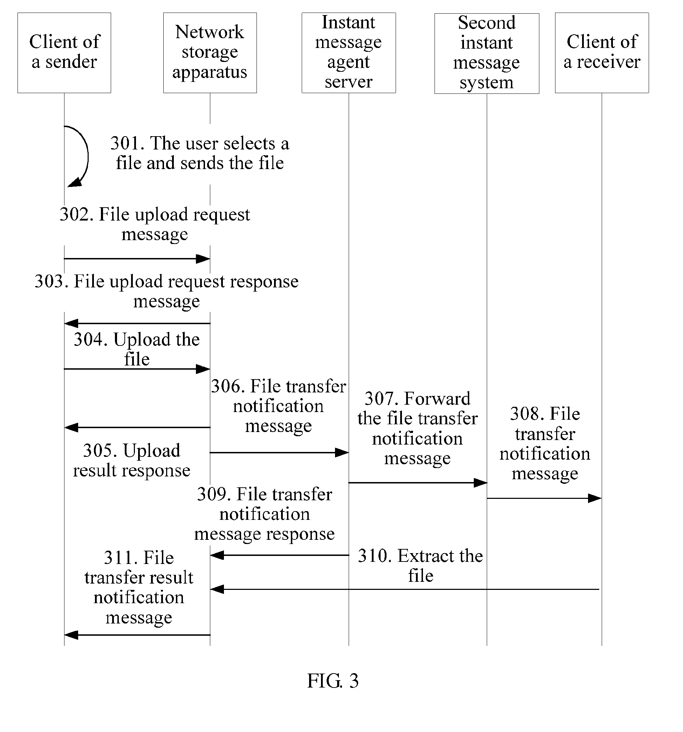

FIG. 3 is a schematic diagram of an application scenario of transferring a file to a user of an instant message system according to an embodiment of the present invention. This scenario illustrates the process of receiving the file by the user. In this embodiment, a first instant message system is an instant message agent system.

A user of the instant message agent system performs an IM chat with a user of a second instant message system by using a client program provided by the instant message agent system, and wants to send a file to the user during the chat. The following steps are included:

301. The user of the first instant message system selects a file and sends it to the user of the second instant message system to initiate file transfer.

302. A client (for example, a PC, an intelligent mobile phone, or a tablet computer) of the instant message agent system sends a file upload request message to an ND, where the request message may include information such as size and name of the file, a type of the file, a user identifier of a sender (the user of the first instant message system), and a user identifier of a receiver (the user of the second instant message system) for the ND to authenticate the sender according to the user identifier of the sender, allocate storage space for the file according to the size of the file and the type of the file, and send a file transfer notification message to the receiver (the user of the second instant message system) according to the identifier of the receiver.

303. The ND returns a file upload request response to the client of the instant message agent system.

Specifically, the ND identifies the correctness of the file upload request message and performs authentication to determine, according to the identifier of the sender, whether the user of the first instant message system is a legal user having the permission to send the file. If the authentication succeeds, a success response is returned to the sender, where the response includes an upload URL allocated to the file so that the user of the first instant message system uploads the file sent to the user of the second instant message system to the URL first; and if the authentication fails, a failure response is returned.

304. The client of the instant message agent system uploads the file to the URL allocated by the ND.

305. The ND returns an upload result response to the client of the instant message agent system.

Specifically, after the upload succeeds, the ND gives a success response message; and if the transfer procedure fails, the ND returns a failure response, and in this situation, the client of the instant message agent system notifies the user of the first instant message system that the file transfer fails.

306. The ND sends a file transfer notification message to an instant message agent server.

Specifically, the notification message may be "User XXXX transfers the file <file name> to you, <http URL, for example, http://192.168.1.1/rcs/usera>, please determine whether to receive or reject."

307. The instant message agent server forwards the file transfer notification message to the second instant message system where the user of the second instant message system is located.

Specifically, the instant message agent server sends the notification message to the second instant message system through an open message interface of the second instant message system.

308. The second instant message system sends the notification message to the user of the second instant message system.

Specifically, the second instant message system uses an IM text message to send the file transfer notification message to a client of the user of the second instant message system, where the notification message may include a name of the sent file, a size of the file, a type of the file, an identifier of the sender, a URL of the file, and the like.

309. The instant message agent server returns a file transfer notification message response to the ND to notify the ND that the file transfer notification message has been successfully sent to the client of the receiver (the user of the second instant message system). If the file transfer notification message fails to be sent, a failure response message is returned and the process goes to step 311.

310. The client of the second instant message system displays the file transfer notification message, for example, the URL of the file, the name of the file, or the identifier of the sender (for example, a screen name or a remark name) in an instant message chat window, and displays receive and reject buttons. The receiver may receive the file from the ND by clicking the receive button or the URL, and locally store the file to the client of the receiver.

311. The ND returns a file transfer response message to the client of the sender (that is, the client of the instant message agent system).

The ND notifies the client of the sender that the file transfer succeeds after the user successfully acquires the file; or notifies the client of the sender that the file transfer fails if the user fails to acquire the file.

It should be noted that, the file may be in an audio, video, text, or picture format. Meanwhile, the file may be downloaded while being uploaded. In this situation, the file upload in step 304 may be performed concurrently with steps 306-310. In addition, when any of the preceding steps fails, the client of the sender displays a file transfer failure.

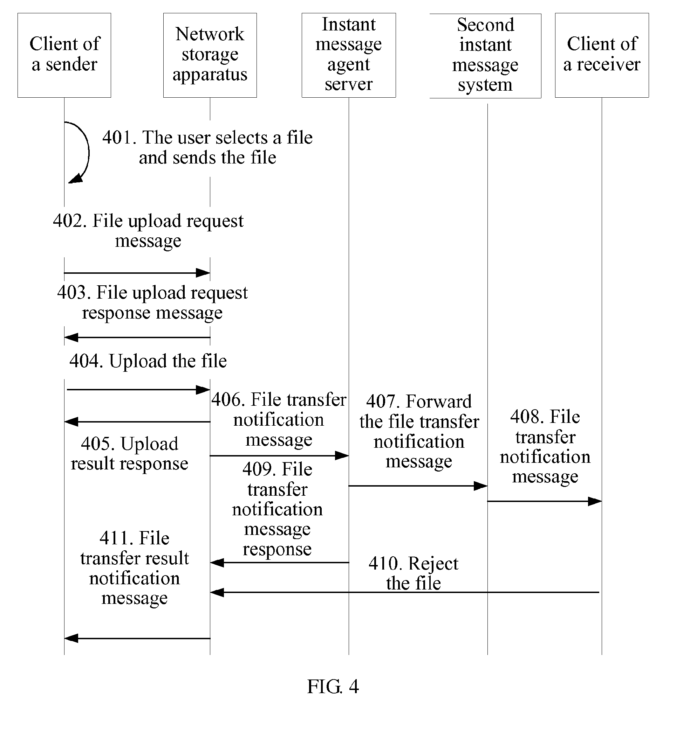

FIG. 4 is a schematic diagram of another application scenario of transferring a file to a user of a different IM system according to an embodiment of the present invention. This scenario illustrates the process of rejecting the file by the user.

The following steps are included:

Steps 401-409 are the same as steps 301-309 in the scenario shown in FIG. 3.

410. The receiver rejects the file, and the client of the receiver sends a reject message to the ND.

411. The ND notifies the client of the sender that the file transfer fails because the receiver rejects the file.

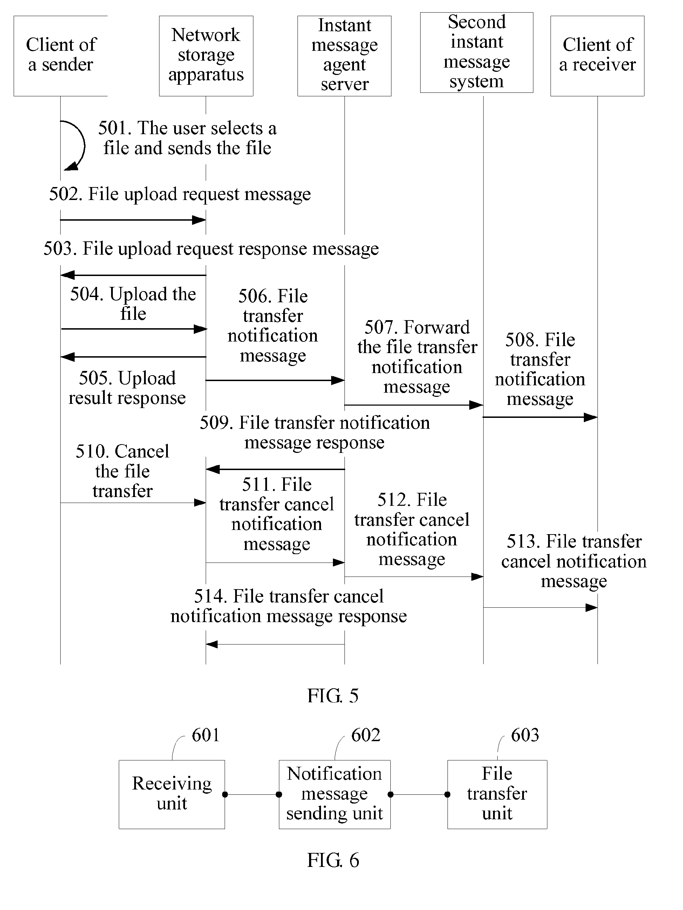

FIG. 5 is a schematic diagram of still another application scenario of transferring a file to a user of an IM system according to an embodiment of the present invention. This scenario illustrates the process of canceling file transfer by a sender before the client of the receiver successfully receives the file.

The following steps are included:

Steps 501-509 are the same as steps 301-309 in the scenario shown in FIG. 3.

510. The sender chooses to cancel the file transfer, and the client of the sender sends a file transfer cancel message to the ND.

511. The ND notifies the instant message agent server that the file transfer has been canceled, and if the ND has received the file, deletes the received file.

512. The instant message agent server sends a file transfer cancel notification message to the second instant message system through an open interface of the second instant message system where the receiver is located.

513. The second instant message system sends the file transfer cancel notification message to the client of the receiver to notify the receiver that the file transfer has been canceled.

514. The instant message agent server returns a file transfer cancel notification response to the ND to notify the ND that the file transfer cancel notification message has been sent to the client of the receiver.

It should be noted that if the client of the sender cancels the file transfer and the file has not been uploaded to the ND in this situation, the client of the sender cancels the file upload, and steps 512-514 are stopped; if the ND does not send the file transfer notification in this situation, that is, step 506 is not performed, the ND does not continue to send the notification, and in this situation, the steps following step 506 are not involved; and if the client of the receiver is receiving the file in this situation, the URL in the original notification message becomes invalid after the ND sends the cancel notification.

In the method for sending a file to a user of a different IM system as described in the foregoing, an ND is set at an instant message agent server side, the ND temporarily stores a file sent by a sender to a receiver, and then the instant message agent server sends a URL of the file to the client of the receiver. In this manner, a user of a different IM system acquires the file by using the URL of the file, thereby achieving the objective of transferring the file to a user of a different IM system. At the same time, the method in this embodiment of the present invention uses an IM text message to bear the file transfer notification message with a low dependency on the instant message system of the receiver, which can be easily expanded to different IM systems and is convenient to implement.

FIG. 6 is a schematic structural diagram of a file transfer apparatus according to an embodiment of the present invention.

Specifically, the apparatus includes a receiving unit 601, a notification message sending unit 602, and a file transfer unit 603, where the receiving unit 601 is configured to receive a file sent by a user of a first instant message system to a user of a second instant message system; the notification message sending unit 602 is configured to send a file transfer notification message to the user of the second instant message system by using an instant message agent system after the receiving unit starts to receive the file; and the file transfer unit 603 is configured to send the file received by the receiving unit to the user of the second instant message system according to a response of the user of the second instant message system based on the file transfer notification message.

Specifically, the receiving unit 601 is configured to receive a file upload request message of the user of the first instant message system;
allocate a uniform resource locator (Uniform Resource Locator, URL) for the file according to the file upload request message; and receive the file that is uploaded by the user of the first instant message system to the URL. Alternatively, the receiving unit may further be configured to receive the file upload request message of the user of the first instant message system; return a file upload request response message to the user of the first instant message system; receive the file uploaded by the user of the first instant message system; and allocate a uniform resource locator for the file.

The notification message sending unit 602 is specifically configured to send the file transfer notification message to an instant message agent server so that the instant message agent server sends the file transfer notification message to a client of a receiver through an open interface of the second instant message system.

It should be noted that the file transfer notification message adopts a common IM text message, and the content may include a user identifier of the sender, a name of the sent file, and a URL of the sent file. The user identifier of the sender may be a user code, for example, a User ID, a user nickname, or a user remark name. The notification message may be, for example, "User XXXX transfers the file <file name> to you, <http URL, for example, http://192.168.1.1/rcs/usera>, please determine whether to receive or reject."

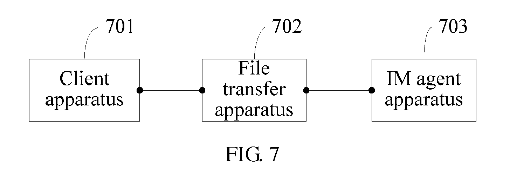

FIG. 7 is a schematic structural diagram of an IM agent system according to an embodiment of the present invention.

The system includes a file transfer apparatus 701, an instant message agent apparatus 702, and a client apparatus 703. The client apparatus (for example, a PC, a mobile phone, or a tablet computer) sends a file to a user of a second instant message system by using the file transfer apparatus 701. The instant message agent apparatus 702 is configured to forward a file transfer notification message to the second message system where a receiver is located. The file transfer apparatus 701 is configured to receive and store the file that is sent by the client apparatus to the user of the non-instant message system; send the file transfer notification message to the receiver by using the instant message agent apparatus; and transfer the file to the receiver according to a response of the receiver based on the file transfer notification message.

In the instant message agent system as described in the foregoing, an ND is set at an instant message agent server side, the ND temporarily stores a file sent by a sender to a receiver, and then the instant message agent server sends a URL of the file to the client of the receiver. In this manner, a user of a different IM system acquires the file by using the URL of the file, thereby achieving the objective of transferring the file to a user of a different IM system. At the same time, the instant message agent system in this embodiment of the present invention uses an IM text message to bear the file transfer notification message with a low dependency on the instant message system of the receiver, which can be easily expanded to different IM systems and is convenient to implement.

Persons of ordinary skill in the art should understand that all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disk, a read-only memory (ROM, Read-Only Memory), a random access memory (RAM, Read-Only Memory), and the like.

In conclusion, the foregoing is merely exemplary embodiments of the present invention, but not intended to limit the protection scope of the present invention. Any modification, equivalent replacement, or improvement made without departing from the principle of the present invention shall fall within the protection scope of the present invention.

## Claims

1. A method for transferring a file to a user of an instant message system, comprising:
receiving a file sent by a user of a first instant message system to a user of a second instant message system;
sending a file transfer notification message to the user of the second instant message system by using an instant message agent server; and
sending the file to the user of the second instant message system according to a response of the user of the second instant message system based on the file transfer notification message.

2. The method for transferring a file according to claim 1, wherein the receiving a file sent by a user of a first instant message system to a user of a second instant message system comprises:
receiving a file upload request message of the user of the first instant message system;
allocating a uniform resource locator URL for the file according to the file upload request message, and returning the URL to the user of the first instant message system; and
receiving the file uploaded to the URL.

3. The method for transferring a file according to claim 1, wherein the receiving a file sent by a user of a first instant message system to a user of a second instant message system comprises:
receiving a file upload request message of the user of the first instant message system;
returning a file upload request response message to the user of the first instant message system;
receiving the file uploaded by the user of the first instant message system; and
allocating a URL for the file.

4. The method for transferring a file according to any one of claims 1 to 3, wherein the sending a file transfer notification message to the user of the second instant message system by using an instant message agent server comprises:
sending the file transfer notification message to the instant message agent server so that the instant message agent server sends the file transfer notification message to the user of the second instant message system through an open message interface of the second instant message system.

5. The method for transferring a file according to claim 1, wherein the file transfer notification message is an instant message IM text message.

6. The method for transferring a file according to claim 5, wherein the file transfer notification message comprises: an identifier of the user of the first instant message system, a name of the file, and a URL of the file.

7. The method for transferring a file according to claim 6, wherein the identifier of the user of the first instant message system comprises at least one of: a user code of the user of the first instant message system, a user nickname of the user of the first instant message system, and a user remark name of the user of the first instant message system.

8. A file transfer apparatus, comprising:
a receiving unit, configured to receive a file sent by a user of a first instant message system to a user of a second instant message system;
a notification message sending unit, configured to send a file transfer notification message to the user of the second instant message system by using an instant message agent server after the receiving unit starts to receive the file; and
a file transfer unit, configured to send the file received by the receiving unit to the user of the second instant message system according to a response of the user of the second instant message system based on the file transfer notification message.

9. The file transfer apparatus according to claim 8, wherein the receiving unit is specifically configured to:
receive a file upload request message of the user of the first instant message system;
allocate a uniform resource locator URL for the file according to the file upload request message; and
receive the file uploaded to the URL.

10. The file transfer apparatus according to claim 8, wherein the receiving unit is specifically configured to:
receive a file upload request message of the user of the first instant message system;
return a file upload request response message to the user of the first instant message system;
receive the file uploaded by the user of the first instant message system; and
allocate a URL for the file.

11. The file transfer apparatus according to claim 8, wherein the notification message sending unit is specifically configured to: send the file transfer notification message to the instant message agent server so that the instant message agent server sends the file transfer notification message to the user of the second instant message system through an open message interface of the second instant message system.

12. An instant message agent system, comprising:
a client apparatus, configured to send a file sent by a user of a first instant message system to a user of a second instant message system;
a file transfer apparatus, configured to receive the file, send a file transfer notification message to an instant message agent apparatus, and send the file to the user of the second instant message system according to a response of the user of the second instant message system based on the file transfer notification message; and
the instant message agent apparatus, configured to forward the file transfer notification message to the user of the second instant message system.

13. The instant message agent system according to claim 12, wherein the instant message agent apparatus is specifically configured to: send the file transfer notification message to the user of the second instant message system through an open message interface of the second instant message system.
